(19) **Europäisches Patentamt**

**European Patent Office**

**Office européen des brevets**

(11) **EP 1 170 283 B1**

(12) **EUROPÄISCHE PATENTSCHRIFT**

(45) Veröffentlichungstag und Bekanntmachung des Hinweises auf die Patenterteilung:
**30.03.2005 Patentblatt 2005/13**

(51) Int Cl.⁷: **C07C 263/04**, C07D 251/34, C08G 18/02

(21) Anmeldenummer: **01111811.4**

(22) Anmeldetag: **16.05.2001**

(54) **Verfahren zur Herstellung von geruchsarmen und lagerstabilen monomerhaltigen Polyisocyanuraten aus Isophorondiisocyanat**

Process for the preparation of low odor and storage-stable monomer-containing polyisocyanurates from isophorone diisocyanate

Procédé pour la préparation de polyisocyanurates avec une faible odeur, stables au stockage et contenant des monomères à partir de diisocyanate d'isophorone

(84) Benannte Vertragsstaaten:
**AT BE CH CY DE DK ES FI FR GB GR IE IT LI LU MC NL PT SE TR**

(30) Priorität: **07.07.2000 DE 10033099**

(43) Veröffentlichungstag der Anmeldung:
**09.01.2002 Patentblatt 2002/02**

(60) Teilanmeldung:
**03104168.4 / 1 396 485**

(73) Patentinhaber: **Degussa AG**
**40474 Düsseldorf (DE)**

(72) Erfinder:
• **Kohlstruk, Stephan, Dr.**
  **48249 Dülmen (DE)**
• **Ewald, Michael**
  **45768 Marl (DE)**
• **Lomölder, Rainer, Dr.**
  **48153 Münster (DE)**

(56) Entgegenhaltungen:
EP-A- 0 017 998     EP-A- 0 447 074
US-A- 3 980 594     US-A- 3 989 651
US-A- 4 503 226     US-A- 4 540 781

**Beschreibung**

Die vorliegende Erfindung betrifft ein Verfahren zur Herstellung von geruchsarmen und lagerstabilen monomerhaltigen Polyisocyanuraten aus Isophorondiisocyanat.

Polyisocyanurate sind als Polyisocyanataddukte wertvolle Komponenten zur Herstellung von hochwertigen Beschichtungen mit guten mechanischen Eigenschaften sowie guter Licht- und Wetterbeständigkeit. Polyisocyanurate aus Isophorondiisocyanat (IPDI) finden zudem Einsatz als Rohstoff für Elastomerapplikationen. Dabei kann es wünschenswert sein, dass das IPDIbasierende Polyisocyanurat, man spricht auch von IPDI-Trimer, in monomerhaltiger Form eingesetzt wird.

Grundsätzlich werden Polyisocyanurate durch katalytische Trimerisierung geeigneter Isocyanate erhalten. Geeignete Isocyanate sind z.B. aromatische, cycloaliphatische und aliphatische diund höherwertige Polyisocyanate. Als Katalysatoren kommen z.B. tert. Amine (US 3,996,223), Alkalimetallsalze von Carbonsäuren (CA 2 113 890; EP 056 159), quart. Ammoniumsalze (US 4,540,781; US 3,989,651; US 3,980,594; EP 447 074; EP 798 299; EP 524 501; US 4,186,255; US 5,258,482; US 4,503,226; US 5,221,743), Aminosilane (EP 197 864; US 4,697,014) und quart. Hydroxyalkylammoniumsalze (EP 017 998; US 4,324,879) in Frage. In Abhängigkeit vom Katalysator ist auch die Verwendung von diversen Co-Katalysatoren möglich, z.B. OH-funktionalisierte Verbindungen oder Mannich Basen aus sek. Aminen und Aldehyden bzw. Ketonen.

Zur Trimerisierung lässt man die Polyisocyanate in Gegenwart des Katalysators, ggf. unter Verwendung von Lösemitteln und/oder Hilfsstoffen, bis zum Erreichen des gewünschten Umsatzes reagieren. Man spricht in diesem Zusammenhang auch von partieller Trimerisierung, da der angestrebte Umsatz in der Regel deutlich unterhalb von 100 % liegt. Danach wird die Reaktion durch Deaktivierung des Katalysators abgebrochen. Dies erfolgt durch Zusatz eines Katalysatorinhibitors wie beispielsweise p-Toluolsulfonsäure, Chlorwasserstoff oder Dibutylphosphat und hat zwangsläufig eine ggf. unerwünschte Kontamination des entstandenen isocyanuratgruppenhaltigen Polyisocyanats zur Folge. Besonders vorteilhaft im Hinblick auf die Trimerisierung von Isocyanaten im technischen Maßstab ist der Einsatz von quart. Hydroxyalkylammoniumcarboxylaten als Oligomerisierungskatalysatoren. Dieser Katalysatortyp ist thermisch labil und erlaubt eine gezielte thermische Deaktivierung, so dass es unnötig ist, die Trimerisierung bei Erreichen des gewünschten Umsatzes durch Zudosierung potentiell qualitätsmindernder Inhibitoren abzustoppen.

Monomerhaltiges IPDI-Trimer, welches beispielsweise für Elastomerapplikationen geeignet ist, weist aus Viskositätsgründen einen NCO-Gehalt von mindestens 25 Gew.-% auf. Das Polyisocyanurat wird durch partielle Trimerisierung von IPDI in Gegenwart eines oder mehrerer geeigneter Katalysatoren hergestellt. Danach muss der Katalysator aus der Reaktionslösung entweder vollständig entfernt - dies kann durch Kurzweg- oder Dünnschichtdestillation erfolgen - oder deaktiviert werden, weil das Trimerisat in Gegenwart aktiver Katalysatorrückstande nicht lagerstabil ist. Liegt der NCO-Gehalt des erhaltenen IPDI-Polyisocyanurats unterhalb des gewünschten Niveaus, kann er durch Verdünnung der Lösung mit monomerem IPDI problemlos wunschgemäß eingestellt werden.

Alkalimetallsalze von Carbonsäuren sind als Katalysatoren für die Herstellung von monomerhaltigem IPDI-Trimer nicht gut geeignet, da sie sich nur schwierig oder gar nicht aus dem Reaktionsprodukt entfernen lassen. In Bezug auf die verfügbaren aminhaltigen Katalysatoren hat es sich erwiesen, dass die resultierenden IPDI-Trimer-Lösungen grundsätzlich mit einem deutlich wahrnehmbaren Geruch behaftet sind, der ausgeprägt genug ist, auch in der Endapplikation noch spürbar und unangenehm in Erscheinung zu treten. Zur Beseitigung der Geruchsbelästigung wird die Reaktionslösung in der technischen Praxis nach partieller Trimerisierung und Katalysatordeaktivierung vom überschüssigen IPDI, von geruchsgebenden Komponenten und ggf. von unerwünschten Katalysatoreninhibitoren befreit. Dies geschieht in der Regel durch Kurzweg- oder Dünnschichtdestillation. Im Anschluss wird das monomerbefreite Festharz unter Zudosierung von frischem IPDI in das gewünschte, geruchsarme und monomerhaltige IPDI-Polyisocyanurat überführt.

Die Sequenz aus partieller Trimerisierung/Deaktivierung, Entmonomerisierung/Reinigung und abschließender Lösung des Festharzes im Monomer ist sehr aufwendig. Zeit- und kostentreibender Schritt und zudem kapazitätslimitierender Engpass der bekannten Verfahren ist vor allem der Schritt der Monomerabtrennung. Es bestand die Aufgabe, ein wirtschaftlicheres Verfahren zur Herstellung von geruchsarmen und lagerstabilen monomerhaltigen Polyisocyanuraten aus Isophorondiisocyanat zu finden, das ohne den Schritt der Entmonomerisierung auskommt.

Überraschend wurde gefunden, dass dieser Schritt tatsächlich eingespart und außerdem zusätzlich der Einsatz von qualitätsmindernden Inhibitoren vermieden werden kann, wenn die Trimerisierung von IPDI in Gegenwart von speziellen Katalysatoren der allgemeinen Formel

$$[R\text{-}NX_3]^{\oplus}\ Y^{\ominus}$$

durchgeführt wird. Es war nicht vorhersehbar, dass durch den Einsatz der speziellen Katalysatoren ein sehr wirtschaftliches Verfahren gefunden werden konnte.

Gegenstand der Erfindung ist deshalb ein Verfahren zur Herstellung von geruchsarmen und lagerstabilen monomerhaltigen Polyisocyanuraten aus Isophorondiisocyanat, durch partielle Trimerisierung innerhalb von 30 Sekunden bis 2 Stunden in Gegenwart von 0,01 bis 2 Gew.-%, basierend auf dem Gewicht des Diisocyanats, eines Katalysators der allgemeinen Formel

$$[\text{R-NX}_3]^{\oplus} \text{ Y}^{\ominus}$$

in der R und X für die Butylgruppe und Y$^-$ für CH$_3$COO$^-$ steht, bei einer Temperatur von 0 bis 200 °C. Auf eine Monomerabtrennung und chemische Deaktivierung des Trimeriserungskatalysators kann verzichtet werden.

Grundsätzlich können zur Trimerisierung geeignete Isocyanate nach verschiedenartigen Verfahren hergestellt werden (Annalen der Chemie 562 (1949), S. 75 ff.). Technisch insbesondere bewährt hat sich die Herstellung durch Phosgenierung von organischen Polyaminen zu den entsprechenden Polycarbaminsäurechloriden und deren thermische Spaltung in organische Polyisocyanate und Chlorwasserstoff. Alternativ können organische Polyisocyanate auch ohne die Verwendung von Phosgen, d.h. nach phosgenfreien Verfahren, hergestellt werden. Nach Angaben der EP 126 299 (US 4,596,678), EP 126 300 (US 4,596,679) und EP 355 443 (US 5,087,739) beispielsweise können (cyclo)aliphatische Diisocyanate wie 1-Isocyanato-3-isocyanatomethyl-3,5,5-trimethylcyclohexan (Isophorondiisocyanat bzw. IPDI) zugänglich gemacht werden durch Umsetzung der zugrunde liegenden (cyclo)aliphatischen Diamine mit Harnstoff und Alkoholen zu (cyclo)aliphatischen Biscarbaminsäureestern und deren thermische Spaltung in die entsprechenden Diisocyanate und Alkohole.

Für das erfindungsgemäße Verfahren zur Herstellung von von geruchsarmen und lagerstabilen monomerhaltigen Polyisocyanuraten aus Isophorondiisocyanat ist es unwesentlich, über welchen Syntheseweg das eingesetzte IPDI hergestellt wurde. Es sei jedoch darauf hingewiesen, dass die zur Erreichung eines wunschgemäßen NCO-Gehaltes notwendige Katalysatormenge auch von der Qualität des Rohstoffes abhängt. Erfahrungsgemäß macht ein ansteigender Gehalt des IPDI an hydrolysierbaren Chlorverbindungen eine Erhöhung der Katalysatormenge erforderlich. Anscheinend übt das hydrolysierbare Chlor tendenziell einen inhibitiven Effekt auf den Kontakt aus.

Die erfindungsgemäße Herstellung der geruchsarmen und lagerstabilen monomerhaltigen Polyisocyanuraten aus Isophorondiisocyanat durch partielle Trimerisierung kann kontinuierlich (Rohrreaktor oder Kesselkaskade) erfolgen oder auch batchweise durchgeführt werden. Der Katalysator wird in geringer Konzentration zwischen 0,01 und 2 Gew.-% eingesetzt. Die exakte Menge lässt sich leicht experimentell ermitteln und ist abhängig vom Katalysator, vom Umsatzziel, von der Qualität des eingesetzten IPDI sowie der Verfahrensweise.

Die partielle Trimerisierung lässt sich innerhalb von 30 Sekunden bis 2 Stunden durchführen. Das Produkt enthält neben monomerem IPDI Verbindungen, die einen oder auch mehrere Isocyanuratringe aufweisen. Als Nebenkomponente können in geringer Menge ggf. auch Verbindungen mit Uretdionstruktur gefunden werden. Verbindungen dieser Art sind in der Literatur beschrieben.

Erfindungsgemäß wird der Katalysator in einer Menge von 0,01 bis 2 Gew.-%, bevorzugt von 0,04 bis 1 Gew.-%, basierend auf dem Gewicht des eingesetzten Isophorondiisocyanats, eingesetzt. Das erfindungsgemäße Verfahren wird bei Temperaturen zwischen 0 °C und 200 °C, vorzugweise zwischen 20 °C und 180 °C, entweder batchweise oder kontinuierlich durchgeführt. Das Batchverfahren wird bevorzugt.

Beim Batchverfahren wird in einem Rührreaktor gearbeitet. Dabei wird die Mischung aus Isophorondiisocyanat und Katalysator üblicherweise bei Raumtemperatur vorgelegt. Im Anschluss wird die Temperatur der Reaktionsmischung zur Initiierung der Trimerisierung auf 40 bis 140 °C, bevorzugt auf 55 bis 100 °C, erhöht. Alternativ kann der Katalysator auch zudosiert werden, nachdem das IPDI die zur Reaktion notwendige Temperatur erreicht hat. Diese Variante ist jedoch nicht bevorzugt. Die Trimerisierung ist exotherm. Der Katalysator kann in reiner Form eingesetzt werden. Es ist auch möglich, den Katalysator in einem geeignetem Lösemittel zu lösen und in dieser Form zum Einsatz zu bringen.

Die kontinuierlich Trimerisierung wird zweckmäßigerweise in einer Reaktionsschlange unter kontinuierlicher, gleichzeitiger Zudosierung von IPDI und des Katalysators bei 40 bis 180 °C und innerhalb von 30 Sekunden bis 10 Minuten durchgeführt. Eine Reaktionsschlange mit kleinem Durchmesser führt zur Erreichung hoher Stömungsgeschwindigkeiten und folglich guter Durchmischung. Weiterhin ist es vorteilhaft, das IPDI/Katalysator-Gemisch vor Eintritt in die Reaktionsschlange auf ca. 50 bis 60°C zu erhitzen. Zur exakteren Dosierung und optimalen Durchmischung des Katalysators ist es weiterhin vorteilhaft, den Katalysator in einem geeignetem Lösemittel zu lösen. Geeignet sind prinzipiell solche Lösemittel, in denen der Katalysator eine gute Löslichkeit hat, z.B. Wasser, niedermolekulare Alkohole wie Methanol oder niedermolekulare organische Säuren wie beispielsweise Essigsäure oder Hexansäure.

Die kontinuierlich Trimerisierung kann auch in einer Kesselkaskade durchgeführt werden. Denkbar ist auch eine Kombination aus Kesselkaskade und Rohrreaktor.

Das Temperaturprofil des erfindungsgemäßen Verfahrens sollte so eingerichtet werden, dass die Reaktionslösung eine Temperatur von 150 bis 180 °C, mindestens aber von 140 bis 160 °C erreicht. Auf diese Weise kann sichergestellt werden, dass das erfindungsgemäß hergestellte Produkt das Kriterium der Lagerstabilität erfüllt und also nicht im Zuge längerer Lagerung vergelt.

Die erfindungsgemäß hergestellten geruchsarmen und lagerstabilen monomerhaltigen Polyisocyanuraten aus Isophorondiisocyanat weisen einen NCO-Gehalt von 25 bis 34 Gew.-% auf. Sie sind nützliche Zwischenprodukte für Polyurethanbeschichtungen und Elastomerapplikationen. Dabei können sie auch in mit Blockierungsmitteln blockierter Form zum Einsatz gelangen. Geeignete Blockierungsmittel sind dabei beispielsweise Lactame wie ε-Caprolactam, Oxime wie Methylethylketoxim oder Butanonoxim, Triazole wie 1H-1,2,4-Triazol, leicht enolisierbare Verbindungen wie Acetessigester oder Acetylaceton oder auch Malonsäurederivate wie Malonsäurediester.

## Beispiele

### Trimerisierung: Beispiele 1 bis 3 und Vergleichsbeispiele 1 bis 5

Die Umsetzungen erfolgten grundsätzlich unter einer $N_2$-Atmosphäre.

### B.1. Trimerisierung von IPDI mit Tetrabutylammoniumacetat

1 500 g IPDI wurden bei Raumtemperatur mit 1,06 g (0,07 Gew.-%) Tetrabutylammoniumacetat (TBAAc) versetzt. Die Temperatur der mechanisch gerührten Reaktionsmischung wurde mit einem Gradienten von 2,5 bis 3°C/min erhöht. Nach Erreichung einer Temperaturspitze von 158 °C war die Reaktion beendet. Man ließ auf Raumtemperatur abkühlen. Der NCO-Gehalt des geruchsarmen Reaktionsproduktes betrug 28,3 % und blieb auch nach Temperung bei 50 °C (12 h) stabil.

### B.2. Trimerisierung von IPDI mit Tetrabutylammoniumacetat/MeOH

1 500 g IPDI wurden bei Raumtemperatur mit 1,41 g (0,07 Gew.-% bezogen auf den lösemittelfreien Katalysator) einer 75%igen Lösung von Tetrabutylammoniumacetat (TBAAc) in Methanol versetzt. Die Temperatur der mechanisch gerührten Reaktionsmischung wurde mit einem Gradienten von 2,5 bis 3°C/min erhöht. Nach Erreichung einer Temperaturspitze von 167°C war die Reaktion beendet. Man ließ auf Raumtemperatur abkühlen. Der NCO-Gehalt des geruchsarmen Reaktionsproduktes betrug 27,0 % und blieb auch nach Temperung bei 50 °C (12 h) stabil (es wurde ein geringfügiger NCO-Verlust durch Allophanatbildung beobachtet).

### B.3. Trimerisierung von IPDI mit Tetrabutytammoniumacetat/MeOH

800 g IPDI wurden bei 100°C mit 0,72 g (0,07 Gew.-% bezogen auf den lösemittelfreien Katalysator) einer 75%igen Lösung von Tetrabutylammoniumacetat (TBAAc) in Methanol versetzt, woraufhin die Temperatur der Reaktionsmischung innerhalb von 6 min auf einen Spitzenwert von 151 °C anstieg. Man ließ auf Raumtemperatur abkühlen. Der NCO-Gehalt des geruchsarmen Reaktionsproduktes betrug 27,8 % und blieb auch nach Temperung bei 50 °C (12 h) stabil (es wurde ein geringfügiger NCO-Verlust durch Allophanatbildung beobachtet).

### Vergleichsbeisspiele

### V.1. Trimersierung von IPDI mit Dabco TMR[R]

1 500 g IPDI wurden bei 80 °C mit 3,75 g (0,25 Gew.-%) Dabco TMR[R] (N-(2-Hydroxypropyl)-N,N,N-trimethylammonium-2-ethylhexanoat, ca. 75%ig in Diethylenglykol) versetzt. Die Temperatur der mechanisch gerührten Reaktionsmischung stieg aufgrund des stark exothermen Verlaufs der Umsetzung innerhalb von ca. 3 min auf einen Spitzenwert von 136 °C an. Man ließ auf Raumtemperatur abkühlen. Der NCO-Gehalt des stark aminisch riechenden Reaktionsproduktes betrug 28,9 % und blieb auch nach Temperung bei 50 °C (12 h) stabil.

Zur Beseitigung des Geruchsproblems wurde nicht umgesetztes IPDI durch Kurzwegverdampfung vom Polyisocyanat abgetrennt. Nach Verdünnung des monomerbefreiten Harzes mit frischem IPDI auf einen NCO-Gehalt von 29,6 % wurde ein geruchsarmes monomerhaltiges IPDI-Trimer erhalten.

### V.2. Trimerisierung von IPDI mit Dabco TMR[R]-2

1 500 g IPDI wurden bei 80 °C mit 3,75 g (0,25Gew.-%) Dabco TMR[R]-2 (N-(2-Hydroxypropyl)-N,N,N-trimethylammoniumformat, ca. 75%ig in Diethylenglykol) versetzt. Die Temperatur der mechanisch gerührten Reaktionsmischung stieg aufgrund des stark exothermen Verlaufs der Umsetzung innerhalb von ca. 3 min auf einen Spitzenwert von 139 °C an. Man ließ auf Raumtemperatur abkühlen. Der NCO-Gehalt des stark aminisch riechenden Reaktionsproduktes betrug 28,2 % und blieb auch nach Temperung bei 50 °C (12 h) stabil.

Zur Beseitigung des Geruchsproblems wurde nicht umgesetztes IPDI durch Kurzwegverdampfung vom Polyisocyanat abgetrennt. Nach Verdünnung des monomerbefreiten Harzes mit frischem IPDI auf einen NCO-Gehalt von 29,6 % wurde ein geruchsarmes monomerhaltiges IPDI-Trimer erhalten.

**V.3. Trimerisierung von IPDI mit N-(2-Hydroxypropyl)-N,N,N-trimethylammoniumhydroxid**

1 500 g IPDI wurden bei 80 °C mit 3,75 g (0,25 Gew.-%) N-(2-Hydroxypropyl)-N,N,N-trimethylammoniumhydroxid (ca. 75%ig in Diethylenglykol) versetzt. Die Temperatur der mechanisch gerührten Reaktionsmischung stieg aufgrund des stark exothermen Verlaufs der Umsetzung innerhalb von ca. 3 min auf einen Spitzenwert von 143 °C an. Man ließ auf Raumtemperatur abkühlen. Der NCO-Gehalt des stark aminisch riechenden Reaktionsproduktes betrug 27,6 % und blieb auch nach Temperung bei 50 °C (12 h) stabil.

Zur Beseitigung des Geruchsproblems wurde nicht umgesetztes IPDI durch Kurzwegverdampfung vom Polyisocyanat abgetrennt. Nach Verdünnung des monomerbefreiten Harzes mit frischem IPDI auf einen NCO-Gehalt von 29,6 % wurde ein geruchsarmes monomerhaltiges IPDI-Trimer erhalten.

**V.4. Trimerisierung von IPDI mit Hexamethyldisilazan (HMDS)**

1 600 g IPDI wurden bei 100 °C mit 1,6 g (1 Gew.-%0,1 mol) HMDS versetzt. Nachdem nach 30 min kein Umsatz beobachtet werden konnte, wurde die Temperatur der mechanisch gerührten Reaktionsmischung auf 120 °C erhöht. Auch unter diesen Bedingungen ließ sich kein nennenswerter Umsatz erzielen. Man ließ auf 50 °C abkühlen und deaktivierte den Katalysator durch Zusatz von 0,9 g (0,05 mol) Wasser. Die Reaktionslösung wies einen NCO-Gehalt von 37,2 % auf und sonderte einen aminartigen Geruch ab. Aufgrund des geringen Umsatzes wurde auf eine Beseitigung des Geruchsproblems durch Kurzwegverdampfung und anschließende Verdünnung des monomerbefreiten Harzes mit frischem IPDI verzichtet.

**V.5. Trimerisierung von IPDI mit Benzyltriethylammoniumacetat**

800 g IPDI wurden bei Raumtemperatur mit 1,34 g (0,17 Gew.-%) Benzyltriethylammoniumacetat in Methanol versetzt. Die Temperatur der mechanisch gerührten Reaktionsmischung wurde mit einem Gradienten von 2,5 bis 3°C/min erhöht. Nach Erreichung einer Temperaturspitze von 149 °C war die Reaktion beendet. Man ließ auf Raumtemperatur abkühlen. Die Reaktionslösung wies einen NCO-Gehalt von 32,7 % auf und sonderte einen deutlich wahrnehmbaren Geruch ab.

Zur Beseitigung des Geruchsproblems wurde nicht umgesetztes IPDI durch Kurzwegverdampfung vom Polyisocyanat abgetrennt. Nach Verdünnung des monomerbefreiten Harzes mit frischem IPDI auf einen NCO-Gehalt von 29,6 % wurde ein geruchsarmes monomerhaltiges IPDI-Trimer erhalten.

Tabelle 1

| Trimerisierungen von IPDI (Beispiele B.1.-B.3. u. Vergleichsbeispiele V.1.-V.5) | | | | | |
|---|---|---|---|---|---|
| Versuch | Kategorie | Katalysator | Kat.-menge [Gew.-%] | NCO-Gehalt [Gew.-%] | Bemerkungen |
| B.1. | Beispiel | N-Benzyl-3-hydroxychinuclidinium-2-ethylhexanoat | 0,5 | 29,2 | lagerstabil, geruchsarm |
| B.2. | Beispiel | N-Benzyl-3-hydroxychinuclidinium-2-ethylhexanoat/MeOH | 0,5 | 28,4 | lagerstabil, geruchsarm |
| B.3. | Beispiel | Tetrabutylammoniumacetat | 0,07 | 28,3 | lagerstabil, geruchsarm |
| B.4. | Beispiel | Tetrabutylammoniumacetat/ MeOH | 0,07 | 27,0 | lagerstabil, geruchsarm |

Tabelle 1   (fortgesetzt)

| Trimerisierungen von IPDI (Beispiele B.1.-B.3. u. Vergleichsbeispiele V.1.-V.5) | | | | | |
|---|---|---|---|---|---|
| Versuch | Kategorie | Katalysator | Kat.-menge [Gew.-%] | NCO-Gehalt [Gew.-%] | Bemerkungen |
| B.5. | Beispiel | Tetrabutylammoniumacetat/ MeOH | 0,07 | 27,8 | lagerstabil, geruchsarm |
| V.1 | Vergleichsbsp. | Dabco TMR$^R$ | 0,25 | 28,9 | lagerstabil, deutliche Geruchsentwicklung |
| V.2. | Vergleichsbsp. | Dabco TMR$^R$-2 | 0,25 | 28,2 | lagerstabil, deutliche Geruchsentwicklung |
| V.3. | Vergleichsbsp. | N-(2-Hydroxypropyl)-N,N,N-trimethylammoniumhydroxid | 0,25 | 27,6 | lagerstabil, deutliche Geruchsentwicklung |
| V.4. | Vergleichsbsp. | Hexamethyldisilazan | 1,0 | 37,2 | lagerstabil, deutliche Geruchsentwicklung |
| V.5. | Vergleichsbsp. | Benzyltriethylammoniumacetat | 0,17 | 32,7 | lagerstabil, deutliche Geruchsentwicklung |

**Patentansprüche**

1. Verfahren zur Herstellung von geruchsarmen und lagerstabilen monomerhaltigen Polyisocyanuraten aus Isophorondiisocyanat, durch partielle Trimerisierung innerhalb von 30 Sekunden bis 2 Stunden in Gegenwart von 0,01 bis 2 Gew.-%, basierend auf dem Gewicht des Diisocyanats, eines Katalysators der allgemeinen Formel

$$[R\text{-}NX_3]^{\oplus} \, Y^{\ominus}$$

in der R und X für die Butylgruppe und Y$^-$ für $CH_3COO^-$ steht, bei einer Temperatur von 0 bis 200 °C.

2. Verfahren gemäß Anspruch 1,
   **dadurch gekennzeichnet,**
   **dass** die lagerstabilen monomerhaltigen Polyisocyanurate aus Isophorondiisocyanat einen NCO-Gehalt von 25 bis 34 Gew.-% aufweisen.

3. Verfahren gemäß den Ansprüchen 1 bis 2,
   **dadurch gekennzeichnet,**
   **dass** die Trimerisierung bei 20 bis 180 °C erfolgt.

4. Verfahren gemäß den Ansprüchen 1 bis 3,
   **dadurch gekennzeichnet,**
   **dass** die Trimerisierung kontinuierlich erfolgt.

5. Verfahren gemäß den Ansprüchen 1 bis 3,
   **dadurch gekennzeichnet,**
   **dass** die Trimerisierung batchweise erfolgt.

**Claims**

1. A process for preparing a low-odour and storage-stable monomer-containing polyisocyanurate from isophorone diisocyanate by partial trimerization over a period of from 30 seconds to 2 hours in the presence of from 0.01 to 2% by weight, based on the weight of the diisocyanate, of a catalyst of the formula

$$[R\text{-}NX_3]^{\oplus}\ Y^{\ominus}$$

where R and X are butyl groups and $Y^-$ is $CH_3COO^-$, at a temperature of from 0 to 200°C.

**2.** A process according to claim 1, **characterized in that** the storage-stable monomer-containing polyisocyanurate derived from isophorone diisocyanate has an NCO content of from 25 to 34% by weight.

**3.** A process according to either of claims 1 and 2, **characterized in that** the trimerization is carried out at from 20 to 180°C.

**4.** A process according to any of claims 1 to 3, **characterized in that** the trimerization is carried out continuously.

**5.** A process according to any of claims 1 to 3, **characterized in that** the trimerization is carried out batchwise.


**Revendications**

**1.** Procédé pour la préparation de polyisocyanurates contenant des monomères, de faible odeur et stables au stockage, à partir de diisocyanate d'isophorone, par trimérisation partielle en l'espace de 30 secondes à deux heures, en présence de 0,01 à 2 % en poids, sur la base du poids du diisocyanate, d'un catalyseur répondant à la formule générale :

$$[R\text{-}NX_3]^{\oplus}\ Y^{\ominus}$$

dans laquelle R et X représentent un groupe butyle et $Y^-$ représente $CH_3\ COO^-$, à une température de 0 à 200 °C.

**2.** Procédé selon la revendication 1,
**caractérisé en ce que**
les polyisocyanurates contenant des monomères, stables au stockage, produits à partir de diisocyanate d'isophorone présentent une teneur en NCO de 25 à 34 % en poids.

**3.** Procédé selon les revendications 1 à 2,
**caractérisé en ce que**
la trimérisation a lieu à 20 à 180 °C.

**4.** Procédé selon les revendications 1 à 3,
**caractérisé en ce que**
la trimérisation a lieu en continu.

**5.** Procédé selon les revendications 1 à 3,
**caractérisé en ce que**
la trimérisation a lieu en discontinu.